# EUROPEAN PATENT APPLICATION

(11) **EP 4 611 112 A1**
(43) Date of publication of application: **03.09.2025**
(21) Application number: 24872636.6
(22) Date of filing: 30.04.2024
(51) Int. Cl.: H01M 10/42, H01M 10/48, G01L 5/00

(54) **APPARATUS FOR EVALUATING BATTERY CELL**

(30) Priority: 26.09.2023 KR 20230129864
(71) Applicant: LG Energy Solution, Ltd., Seoul 07335 (KR)
(72) Inventor: YOON, Tae Keon, Daejeon 34122 (KR); LEE, Jin Wuk, Daejeon 34122 (KR); WON, Kwang Ho, Daejeon 34122 (KR)
(74) Representative: Goddar, Heinz J.
(86) International application number: PCT/KR2024/005895
(87) International publication number: WO 2025/070922

(57) **Abstract**

Disclosed is a battery cell evaluation apparatus, and more particularly a battery cell evaluation apparatus including a jig, the jig including: a housing including a cavity; a holder unit received in the cavity, the holder unit including a first connection member and a second connection member each configured to fix an electrode lead of a battery cell; and a first elevation adjustment member configured to adjust the height of the second connection member, wherein the first elevation adjustment member is configured to measure a pressing force of the second connection member when the second connection member and the first connection member are in tight contact or the second connection member and the electrode lead are in tight contact.

## Description

### [Technical Field]

This application claims the benefit of priority to Korean Patent Application No. 2023-0129864 filed on September 26, 2023, the disclosure of which is incorporated herein by reference in its entirety.

The present invention relates to a battery cell evaluation apparatus, and more particularly to a battery cell evaluation apparatus having a structure capable of improving reliability of evaluation results.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet.

Meanwhile, in order to produce and ship lithium ion batteries, the lithium ion batteries undergo various processes, such as an aging process, a charging and discharging process, open circuit voltage (OCV) inspection, and internal resistance (IR) inspection, among which the charging and discharging process is a process in which produced secondary batteries are repeatedly charged and discharged, which is a very important process that determines the quality of secondary batteries.

In order to charge and discharge a secondary battery, a charging and discharging jig configured to apply current to an electrode lead or an electrode tab is used, wherein the secondary battery is mounted on the jig, and current is applied to charge and discharge the secondary battery in the state in which the electrode lead or the electrode tab of the secondary battery is in contact with a current terminal of the jig.

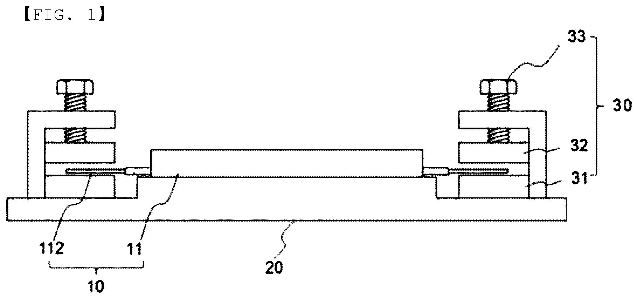

In this regard, FIG. 1 is a sectional view of a conventional charging and discharging jig. As shown in FIG. 1, the jig 30, which is electrically connected to a battery cell, includes a lower member 31 and an upper member 32 configured to fix an electrode lead 12 at an upper surface and a lower surface thereof and a screw 33 configured to downwardly move the upper member 32.

Meanwhile, since the resistance of the battery cell may vary depending on the adhesion between the electrode lead and a connection member, it is necessary to connect the electrode lead and the connection member with uniform force at all times. However, since the jig shown in FIG. 1 only moves the upper member 32 by rotating the screw 33, it is difficult to control uniform force applied to the electrode lead consistently by different operators or even by the same operator, which is pointed out as a cause of low reliability of the battery cell evaluation results.

Also, it is preferable for the electrode lead of the battery cell to be fastened to the jig in a horizontal state without bending when the electrode lead and the connection member are connected to each other. However, since recent battery cells have various capacities and thus various overall sizes, there is a need for a jig capable of allowing the electrode lead to be fastened thereto without deforming the electrode lead as much as possible.

### (Prior Art Document)

(Patent Document 1) Korean Patent Application Publication No. 2022-0040647

### [Disclosure]

### [Technical Problem]

The present invention has been made in view of the above problems, and it is an object of the present invention to provide a battery cell evaluation apparatus with a jig capable of adjusting the pressing force of a connection member to be fastened to an electrode lead so as to improve reliability of evaluation results.

It is another object of the present invention to provide a battery cell evaluation apparatus capable of allowing an electrode lead to be fastened to a jig in a horizontal state even when the volume of a battery cell changes.

### [Technical Solution]

A battery cell evaluation apparatus according to the present invention, as a technical means for accomplishing the above objects, includes a jig (100), the jig including: a housing (110) having a cavity (S); a holder unit (120) received in the cavity (S), the holder unit including a first connection member (121) and a second connection member (122) each configured to fix an electrode lead (12) of a battery cell (10); and a first elevation adjustment member (130) configured to adjust the height of the second connection member (122), wherein the first elevation adjustment member (130) is configured to measure a pressing force of the second connection member (122) when the second connection member (122) and the first connection member (121) are in contact or the second connection member (122) and the electrode lead (12) are in tight contact.

Also, in the battery cell evaluation apparatus according to the present invention, the first elevation adjustment member (130) may be a torque wrench.

Also, in the battery cell evaluation apparatus according to the present invention, the first elevation adjustment member (130) may include: a first screw type vertical member (131) extending through the housing (110), wherein one end of the first screw type vertical member is connected to the second adjustment member (122); a handle (132) exposed outside of the housing (110), wherein the handle is connected to the other end of the first screw type vertical member (131); and a pressure gauge (133) provided at the handle (132).

Also, the battery cell evaluation apparatus according to the present invention may further include a die unit configured to seat the battery cell (10) or the jig (100) thereon.

Also, in the battery cell evaluation apparatus according to the present invention, the die unit may include: a main die unit (200) having a predetermined area; a first die unit located on the main die unit (200), wherein the first die unit is configured to seat the battery cell (10) thereon; and a second die unit (400) located on the main die unit (200), wherein the second die unit is configured to seat the jig (100) thereon.

Also, in the battery cell evaluation apparatus according to the present invention, at least one of the first die unit (300) and the second die unit (400) may be height adjustable.

Also, in the battery cell evaluation apparatus according to the present invention, the first die unit (300) may include: a first plate (310) having a predetermined area and a side surface, wherein the side surface of the first plate includes at least one second hole (311); at least one second vertical member (320) extending through the first plate (310) in a vertical direction, wherein one end of the second vertical member is fixed to the main die unit (200); and at least one screw type first fixing member (330) fastened to the second hole (311), wherein the second vertical member (320) may be exposed through the second hole (311), and the vertical movement of the first plate (310) may be restricted by the screw type first fixing member (330).

Also, in the battery cell evaluation apparatus according to the present invention, an outer surface of the second vertical member (320) may include a scale.

Also, in the battery cell evaluation apparatus according to the present invention, the second die unit (400) may include: a second plate (410) having a predetermined area and a side surface, wherein the side surface of the second plate includes at least one third hole (411); at least one third vertical member (420) extending through the second plate (410) in the vertical direction, wherein one end of the third vertical member is fixed to the main die unit (200); and at least one screw type second fixing member (430) fastened to the third hole (411), wherein the third vertical member (420) may be exposed through the third hole (411), and the vertical movement of the second plate (410) may be restricted by the screw type second fixing member (430).

Also, in the battery cell evaluation apparatus according to the present invention, an outer surface of the third vertical member (420) may include a scale.

Also, in the battery cell evaluation apparatus according to the present invention, the second die unit (400) may be provided in two and may be located on each side of the first die unit (300).

Also, in the battery cell evaluation apparatus according to the present invention, the jig (100) may be provided in two and may be located at each of the second die units (400).

### [Advantageous Effects]

As is apparent from the above description, a battery cell evaluation apparatus according to the present invention has the advantage that, since a jig with a function capable of checking the force applied to a connection member in tight contact with an electrode lead is used, the measurement results of a battery cell, such as the resistance value, are accurate.

In addition, the battery cell evaluation apparatus according to the present invention has the merit that, since a die unit capable of adjusting the height of the battery cell or the jig is provided, the electrode lead can always be fastened to the jig in a horizontal state regardless of a change in the volume of the battery cell.

### [Description of Drawings]

FIG. 1 is a sectional view of a conventional charging and discharging jig.
FIG. 2 is a perspective view of a battery cell evaluation apparatus according to the present invention.
FIG. 3 is a perspective view of a jig constituting the battery cell evaluation apparatus according to the present invention.
FIG. 4 is a front view of the battery cell evaluation apparatus shown in FIG. 2.
FIG. 5 is a plan view of the battery cell evaluation apparatus shown in FIG. 2.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery cell evaluation apparatus according to the present invention will be described.

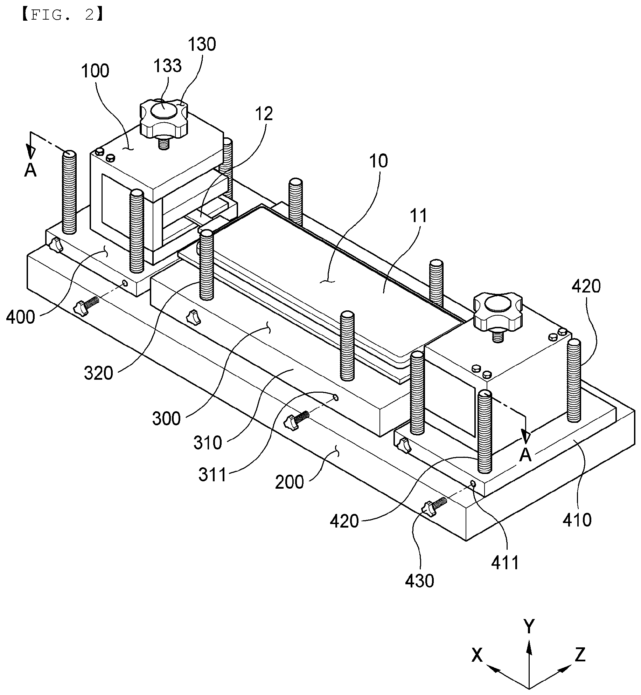

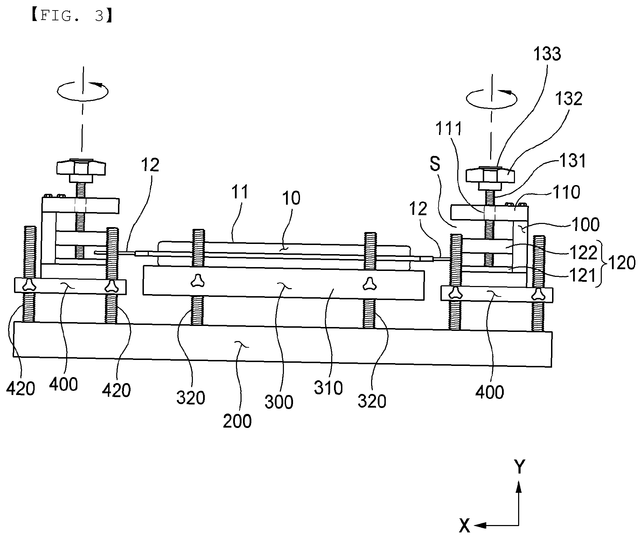

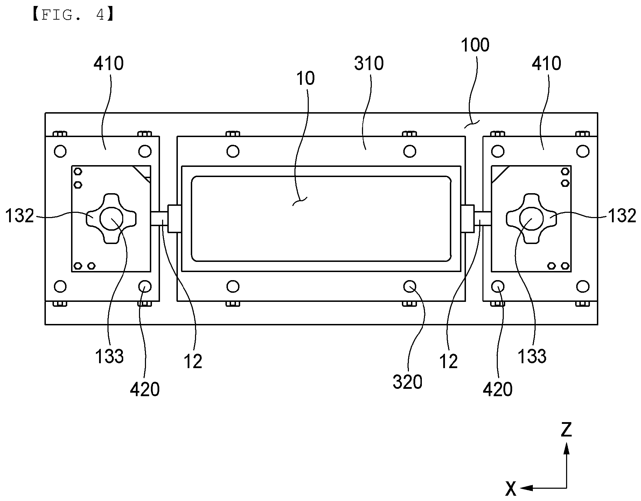

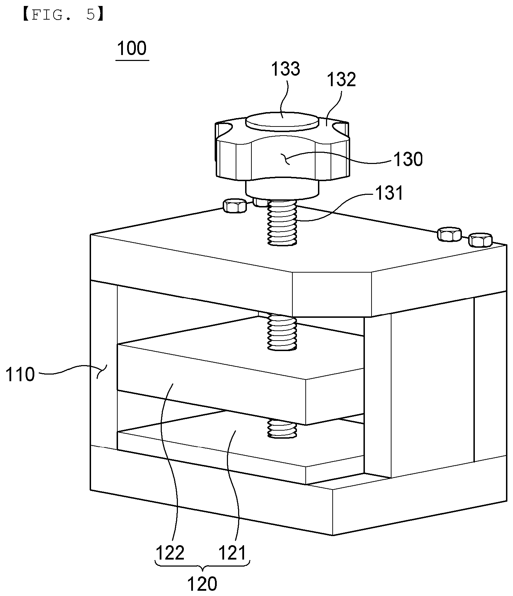

FIG. 2 is a perspective view of a battery cell evaluation apparatus according to the present invention, and FIG. 3 is a perspective view of a jig constituting the battery cell evaluation apparatus according to the present invention. In addition, FIG. 4 is a front view of the battery cell evaluation apparatus shown in FIG. 2, and FIG. 5 is a plan view of the battery cell evaluation apparatus shown in FIG. 2.

As shown in FIGs. 2 to 5, the battery cell evaluation apparatus according to the present disclosure may include a jig 100 electrically connected to a battery cell 10, a main die unit 200, a first die unit 300, and a second die unit 400.

First, the battery cell 10 includes a cell case 11 configured to receive an electrode assembly and a pair of electrode leads 12 protruding and extending from opposite sides of the cell case 11, wherein three or four edges of the cell case 11 are sealed.

The cell case 210 may be made of a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the cell case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto. Polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

The electrode assembly may be a jelly-roll type electrode assembly, which is configured to have a structure in which a long sheet type negative electrode and a long sheet type positive electrode are wound in the state in which a separator is interposed therebetween; a stacked type electrode assembly including unit cells, each of which is configured to have a structure in which a rectangular positive electrode and a rectangular negative electrode are stacked in the state in which a separator is interposed therebetween; a stacked and folded type electrode assembly, which is configured to have a structure in which unit cells are wound using a long separation film; or a laminated and stacked type electrode assembly, which is configured to have a structure in which unit cells are stacked in the state in which a separator is interposed therebetween and are then attached to each other; however, the present invention is not limited thereto.

The negative electrode is manufactured by applying a slurry mixture of a negative electrode active material and a binder to a negative electrode current collector.

The negative electrode current collector is generally manufactured so as to have a thickness of 3 to 500 µm. The negative electrode current collector is not particularly restricted as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy.

As the negative electrode active material, for example, there may be used carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, a conductive agent and a binder may be further mixed with the negative electrode active material, and may be provided on the negative electrode current collector by coating.

The positive electrode is manufactured by applying a slurry mixture of a positive electrode active material and a binder to a positive electrode current collector.

In general, the positive electrode current collector may have a thickness of 3 to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesive force of the positive electrode active material, or may be configured in any of various forms, such as a film, a sheet, a foil, a net, a porous body, a foam body, and a non-woven fabric body.

A layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; or Fe₂(MoO₄)₃ may be used as the positive electrode active material; however, the present invention is not limited thereto.

A conductive agent and a binder may be further mixed with the positive electrode active material, and a filler may be further added if necessary.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, each of the negative electrode current collector and the positive electrode current collector includes a part to which the slurry mixture including the active material is applied and an uncoated portion, which is a part to which no slurry mixture is applied, wherein the uncoated portion is cut to form an electrode tab, or a separate conductive member is connected to the uncoated portion by ultrasonic welding to form an electrode tab, and electrode tabs are gathered to form a tab bundle.

A pair of electrode leads constituted by a positive electrode lead and a negative electrode lead is electrically connected respectively to tab bundles of the electrode assembly, and is exposed to the outside of the cell case 11.

The jig 100 will now be described in detail. The jig 100 may include a housing 110 having a cavity S, a holder unit 120 received in the cavity S, the holder unit including a first connection member 121 and a second connection member 122 configured to fix the electrode lead 12 of the battery cell 10, and a first elevation adjustment member 130 configured to adjust the height of the second connection member 122.

The first connection member 121 received in the cavity S of the housing 110 is fixed to the housing 110, whereas the second connection member 122 is connected to the first elevation adjustment member 130 so as to be movable upward and downward such that the electrode lead 12 of the battery cell 10 to be measured can be fastened or separated.

In order to evaluate the battery cell, the electrode lead 12 must be electrically connected to a terminal (not shown) of a charging and discharging apparatus via the first connection member 121 and the second connection member 122. Consequently, each of the first connection member 121 and the second connection member 122 may be made of metal, for example, bronze.

The first elevation adjustment member 130 includes a first screw type vertical member 131 extending through a first hole 111 of the housing 110, one end of the first vertical member being connected to the second adjustment member 122, a handle 132 exposed outside the housing 110, the handle being connected to the other end of the first vertical member 131, and a pressure gauge 133 provided at the handle 132.

When the handle 132 is rotated in the state in which the electrode lead 12 is located between the first connection member 121 and the second connection member 122, the second connection member 122 is moved downward to fix the electrode lead 12.

When evaluating various kinds of performance of the battery cell, such as resistance, temperature, or electrolyte leakage, in a state of being connected to the charge or discharge apparatus, it is necessary to perform the evaluation under the same conditions.

In particular, if the contact resistance generated at the contact surfaces of the first connection member and the second connection member, to which the electrode lead is connected is high, heat is generated at the contact area, whereby accurate evaluation may not be performed. Consequently, it is necessary to minimize the contact resistance.

The pressure gauge 133 provided at the handle 132 is a gauge configured to indicate the force applied to the second connection member 122, i.e., the pressure received by the electrode lead 12 if the electrode lead 12 is interposed between the first connection member 121 and the second connection member 122, and the pressure received by the second connection member 122 if the electrode lead 12 is not interposed therebetween.

The first elevation adjustment member 130 is not particularly restricted as long as the first elevation adjustment member is capable of performing the above functions, i.e., pressing with a specific force and indicating the pressing force. As an example, the first elevation adjustment member may be a torque wrench. The function and measurement principle of the torque wrench are known in the art, and therefore a detailed description thereof will be omitted.

Next, the die units will be described. The die units, where the battery cell 10 or the jig 100 is mounted, include an approximately plate-shaped main die unit 200 having a predetermined area and thickness and a first die unit 300 and a second die unit 400 located on the main die unit 200.

The first die unit 300, where the battery cell 10 is seated, is located in the center of the main die unit 200, and the second die unit 400, where the jig 100 is seated, is located on each side of the first die unit 300.

Preferably, at least one of the first die unit 300 and the second die unit 400 is height adjustable, and more preferably, both the first die unit 300 and the second die unit 400 are height adjustable.

When the electrode lead 12 of the battery cell 10 is connected to the jig 100, the electrode lead 12 must be interposed between the first connection member 121 and the second connection member 122 of the jig 100 in a horizontal state without bending.

However, the battery cell 10 may vary in capacity and, accordingly, the thickness of the battery cell 10, i.e., the thickness of the cell case 11, may vary. Therefore, it is preferable for the first die unit 300, where the battery cell 10 is seated, and/or the second die unit 400, where the jig 100 is seated, to be movable upward and downward such that the electrode lead 12 can be connected to the jig 100 in a horizontal state, regardless of the thickness of the cell case 11.

Specifically, the first die unit 300 may include a first plate 310 having a predetermined area and provided in a side surface thereof with at least one second hole 311, at least one second vertical member 320 extending through the first plate 310 in a vertical direction, one end of the second vertical member being fixed to the main die unit 200, and at least one screw type first fixing member 330 fastened to the second hole 311.

Here, the second vertical member 320 is exposed through the second hole 311, and the vertical movement of the first plate 310 is restricted by the first fixing member 330.

As a result, the first plate 310 is slidable upward and downward along the first fixing member 330, which extends through the vicinity of each corner of the first plate, and is also fixed at a specific position by the first fixing member 330.

Meanwhile, each of four second vertical members 320 is preferably provided on an outer surface thereof with a scale, which facilitates maintenance of the first plate 310 in an accurately horizontal position.

Next, the second die unit 400, where the jig 100 is seated, is located at each edge of the main die unit 200, i.e., each side of the first die unit 300.

The second die unit 400 may include a second plate 410 having a predetermined area and provided in a side surface thereof with at least one third hole 411, at least one third vertical member 420 extending through the second plate 410 in a vertical direction, one end of the third vertical member being fixed to the main die unit 200, and at least one screw type second fixing member 430 fastened to the third hole 411.

Here, the third vertical member 420 is exposed through the third hole 411, and the vertical movement of the second plate 410 is restricted by the second fixing member 430.

As a result, the second plate 410 is slidable upward and downward along the third vertical member 420, which extends through the vicinity of each corner of the second plate, and is also fixed at a specific position by the second fixing member 430.

Meanwhile, the third vertical member 420, which extends through the second plate 410, is preferably provided on an outer surface thereof with a scale, which facilitates maintenance of the first plate 310 in an accurately horizontal position.

When the battery cell is evaluated using the battery cell evaluation apparatus having the aforementioned configuration, the negative electrode lead and the positive electrode lead are fastened to a pair of jigs, respectively. At this time, fastening is performed such that the pressure gauge of the first elevation adjustment member always indicates the same range. Of course, it is preferable to identify in advance the pressure at which the contact resistance is minimized.

In addition, the pair of jigs is connected to charging and discharging terminals such that the charging and discharging apparatus (not shown) can charge and discharge the battery cell.

Meanwhile, the charging and discharging apparatus charges and discharges a battery cell electrically connected thereto, and includes a power supply unit, a load unit, and a switching circuit. The power supply unit regulates voltage and/or current and applies the regulated voltage and/or current to the battery cell in order to charge the battery cell, the load unit discharges energy stored in the battery cell, and the switching circuit allows the power supply unit and the load unit to be selectively electrically connected to the battery cell. The charging and discharging apparatus is known in the art, and therefore a further description thereof will be omitted.

Of course, it should be understood that the resistance, temperature, or electrolyte leakage of the battery cell may be monitored during charging and discharging of the battery cell.

Although the specific details of the present invention have been described in detail, those skilled in the art will appreciate that the detailed description thereof discloses only preferred embodiments of the present invention, which do not limit the scope of the present invention. Accordingly, those skilled in the art will appreciate that various changes and modifications are possible, without departing from the category and the technical idea of the present invention, and it will be understood that such changes and modifications fall within the scope of the appended claims.

### (Description of Reference Symbols)

10: Battery cell
11: Cell case
12: Electrode lead
100: Jig
110: Housing 111: First hole
120: Holder unit
121: First connection member 122: Second connection member
130: First elevation adjustment member
131: First vertical member 132: Handle
133: Gauge
200: Main die unit
300: First die unit
310: First plate 311: Second Hole
320: Second vertical member
330: First fixing member
400: Second die unit
410: Second plate 411: Third hole
420: Third vertical member
430: Second fixing member
S: Cavity

## Claims

1. A battery cell evaluation apparatus comprising a jig, the jig comprising:
a housing including a cavity;
a holder unit received in the cavity, the holder unit comprising a first connection member and a second connection member each configured to fix an electrode lead of a battery cell; and
a first elevation adjustment member configured to adjust a height of the second connection member, wherein
the first elevation adjustment member is configured to measure a pressing force of the second connection member when the second connection member and the first connection member are in tight contact or the second connection member and the electrode lead are in tight contact.

2. The battery cell evaluation apparatus according to claim 1, wherein the first elevation adjustment member is a torque wrench.

3. The battery cell evaluation apparatus according to claim 2, wherein the first elevation adjustment member comprises:
a first screw type vertical member extending through the housing, wherein one end of the first screw type vertical member is connected to the second adjustment member;
a handle exposed outside of the housing, wherein the handle is connected to the other end of the first screw type vertical member; and
a pressure gauge provided at the handle.

4. The battery cell evaluation apparatus according to claim 1, further comprising a die unit configured to seat the battery cell or the jig thereon.

5. The battery cell evaluation apparatus according to claim 4, wherein the die unit comprises:
a main die unit having a predetermined area;
a first die unit located on the main die unit, wherein the first die unit is configured to seat the battery cell thereon; and
a second die unit located on the main die unit, wherein the second die unit is configured to seat the jig thereon.

6. The battery cell evaluation apparatus according to claim 5, wherein at least one of the first die unit and the second die unit is height adjustable.

7. The battery cell evaluation apparatus according to claim 6, wherein
the first die unit comprises:
a first plate having a predetermined area and a side surface, wherein the side surface of the first plate includes at least one second hole;
at least one second vertical member extending through the first plate in a vertical direction, wherein one end of the second vertical member is fixed to the main die unit; and
at least one screw type first fixing member fastened to the second hole, and
the second vertical member is exposed through the second hole and vertical movement of the first plate is restricted by the screw type first fixing member.

8. The battery cell evaluation apparatus according to claim 7, wherein an outer surface of the second vertical member includes a scale.

9. The battery cell evaluation apparatus according to claim 6, wherein
the second die unit comprises:
a second plate having a predetermined area and a side surface, wherein the side surface of the second plate includes at least one third hole;
at least one third vertical member extending through the second plate in a vertical direction, wherein one end of the third vertical member is fixed to the main die unit; and
at least one screw type second fixing member fastened to the third hole, and
the third vertical member is exposed through the third hole and vertical movement of the second plate is restricted by the screw type second fixing member.

10. The battery cell evaluation apparatus according to claim 9, wherein an outer surface of the third vertical member includes a scale.

11. The battery cell evaluation apparatus according to claim 6, wherein the second die unit is provided in two and is located on each side of the first die unit.

12. The battery cell evaluation apparatus according to claim 11, wherein the jig is provided in two and is located at each of the second die units.
